(19)

Europäisches
Patentamt
European
Patent Office
Office européen
des brevets

(11) **EP 2 657 906 A1**

(12) **EUROPEAN PATENT APPLICATION**

(43) Date of publication:
**30.10.2013  Bulletin 2013/44**

(51) Int Cl.:
*G06T 3/60* *(2006.01)*       *H04N 7/26* *(2006.01)*

(21) Application number: **13165530.0**

(22) Date of filing: **26.04.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.04.2012  US 201213457572**

(71) Applicant: **Intel Corporation
Santa Clara, CA 95054 (US)**

(72) Inventors:
• **Koo, Heon-Mo
Cupertino
California 95014 (US)**

• **Cheng, Scott
Folsom
California 95630 (US)**
• **Thajudeen, Tariq
Santa Clara,
CA 95054 (US)**
• **Zha, Xianliang
El Dorado Hills
California 95630 (US)**
• **Jin, Yuan
Folsom
California 95630 (US)**

(74) Representative: **Goddar, Heinz J.
Boehmert & Boehmert
Pettenkoferstrasse 20-22
80336 München (DE)**

(54) **Concurrent image decoding and rotation**

(57)   Systems, apparatus, articles, and methods are described including operations for concurrent image decoding and rotation.

EP 2 657 906 A1

**Description**

BACKGROUND

Many digital images captured by digital cameras may be compressed and stored in the form of discrete cosine transform (DCT)- based Joint Photographic Experts Group (JPEG) encoded images. Such digital cameras may be designed to take horizontal photographs that are wider than they are tall. Digital cameras with a built- in orientation sensor may allow auto- rotation to reflect the positioning of the camera with respect to the ground. The rotation parameter may be specified in an Exchangeable Image File Format (EXIF) header in JPEG compressed image data. Four orientation settings are typically possible, zero degrees, clockwise ninety degrees, one- hundred and eighty degrees, and counter clockwise ninety degrees.

In order to display a JPEG encoded image with originally intended orientation, a JPEG image viewer may rotate the decoded image properly. The procedure typically includes the following operations: 1. decode the JPEG encoded image; 2. write and store the decoded image; 3. read the decoded image; 4. rotate the image; 5. write and store the rotated image; and 6. display the rotated image. Accordingly, such procedures may require that the step of rotating the image occur only after writing and storing the decoded image. Accordingly, the decoded image may be read from storage (memory or disk), the image may be rotated, and the rotated image may be written to storage to display it.

BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:

FIG. 1 is an illustrative diagram of an example decoding and rotation system;

FIG. 2 is a flow chart illustrating an example decoding and rotation process;

FIG. 3 is an illustrative diagram of an example decoding and rotation process in operation;

FIG. 4 is an illustrative diagram of an example decoding and rotation system;

FIG. 5 is an illustrative diagram of an example system; and

FIG. 6 is an illustrative diagram of an example system, all arranged in accordance with at least some implementations of the present disclosure.

DETAILED DESCRIPTION

One or more embodiments or implementations are now described with reference to the enclosed figures. While specific configurations and arrangements are discussed, it should be understood that this is done for illustrative purposes only. Persons skilled in the relevant art will recognize that other configurations and arrangements may be employed without departing from the spirit and scope of the description. It will be apparent to those skilled in the relevant art that techniques and/or arrangements described herein may also be employed in a variety of other systems and applications other than what is described herein.

While the following description sets forth various implementations that may be manifested in architectures such system- on- a- chip (SoC) architectures for example, implementation of the techniques and/or arrangements described herein are not restricted to particular architectures and/or computing systems and may be implemented by any architecture and/or computing system for similar purposes. For instance, various architectures employing, for example, multiple integrated circuit (IC) chips and/or packages, and/or various computing devices and/or consumer electronic (CE) devices such as set top boxes, smart phones, etc., may implement the techniques and/or arrangements described herein. Further, while the following description may set forth numerous specific details such as logic implementations, types and interrelationships of system components, logic partitioning/ integration choices, etc., claimed subject matter may be practiced without such specific details. In other instances, some material such as, for example, control structures and full software instruction sequences, may not be shown in detail in order not to obscure the material disclosed herein.

The material disclosed herein may be implemented in hardware, firmware, software, or any combination thereof.

The material disclosed herein may also be implemented as instructions stored on a machine-readable medium, which may be read and executed by one or more processors. A machine-readable medium may include any medium and/or mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others.

References in the specification to "one implementation", "an implementation", "an example implementation", etc., indicate that the implementation described may include a particular feature, structure, or characteristic, but every implementation may not necessarily include the particular feature, structure, or characteristic. Moreover, such phrases are not necessarily referring to the same implementation. Further, when a particular feature, structure, or characteristic is described in connection with an implementation, it is submitted that it is within the knowledge of one skilled in the art to effect such feature, structure, or characteristic in connection with other implementations whether or not explicitly described herein.

Systems, apparatus, articles, and methods are described below including operations for concurrent image decoding and rotation.

As described above, in some cases, in conventional implementations a JPEG decoder may take a JPEG encoded bitstream as input and may write the JPEG decoded image to a data storage such as memory or hard disk. In order to display a JPEG encoded image with originally intended orientation, a JPEG image viewer may decode a JPEG encoded image, and later rotate the decoded image properly. The decoded image may be read from memory for image rotation. The rotated image may be written to the storage, and finally the rotated image data may be sent to a display device.

As will be described in greater detail below, operations for concurrent image decoding and rotation may permit performance of the image rotation in parallel with JPEG image decoding. For example, a JPEG decoder may be adapted to perform JPEG image rotation at the JPEG decoding stage. Such operations may avoid an image data read and write prior to JPEG image rotation. As a result, such concurrent image decoding and rotation operations may improve performance by reducing the processing time of decoding and display for JPEG image rotation.

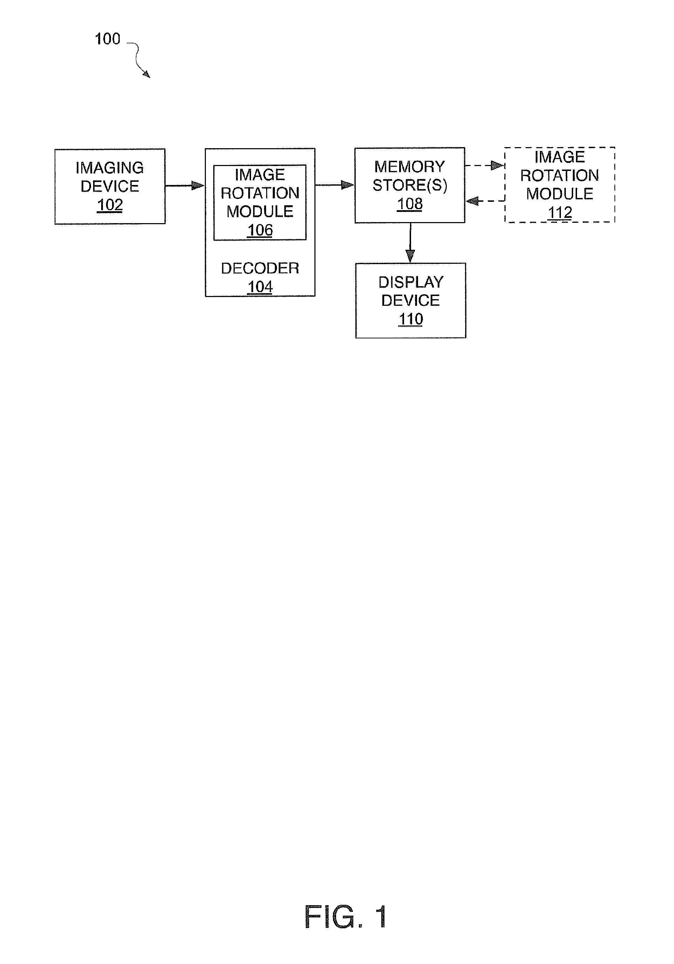

FIG. 1 is an illustrative diagram of an example decoding and rotation system 100, arranged in accordance with at least some implementations of the present disclosure. In the illustrated implementation, decoding and rotation system 100 may include one or more imaging devices 102, a decoder 104, one or more memory stores 108, and/or a display device 110. In some examples, decoding and rotation system 100 may include additional items that have not been shown in FIG. 1 for the sake of clarity. For example, decoding and rotation system 100 may include a processor, a radio frequency-type (RF) transceiver, and/or an antenna. Further, decoding and rotation system 100 may include additional items such as a speaker, a microphone, an accelerometer, memory, a router, network interface logic, etc. that have not been shown in FIG. 1 for the sake of clarity.

In some examples, decoder 104 configured to receive an image from imaging device 102. The image may be a JPEG still image, a Moving Picture Experts Group (MPEG) video image, the like, and/or combinations thereof.

Rotation data may be associated with the image. For example, imaging device 102 may sense the orientation of imaging device 102 (e.g., via an accelerometer or the like) and associate (e.g., via a header on the image or the like) the corresponding rotation data with any image taken in that orientation.

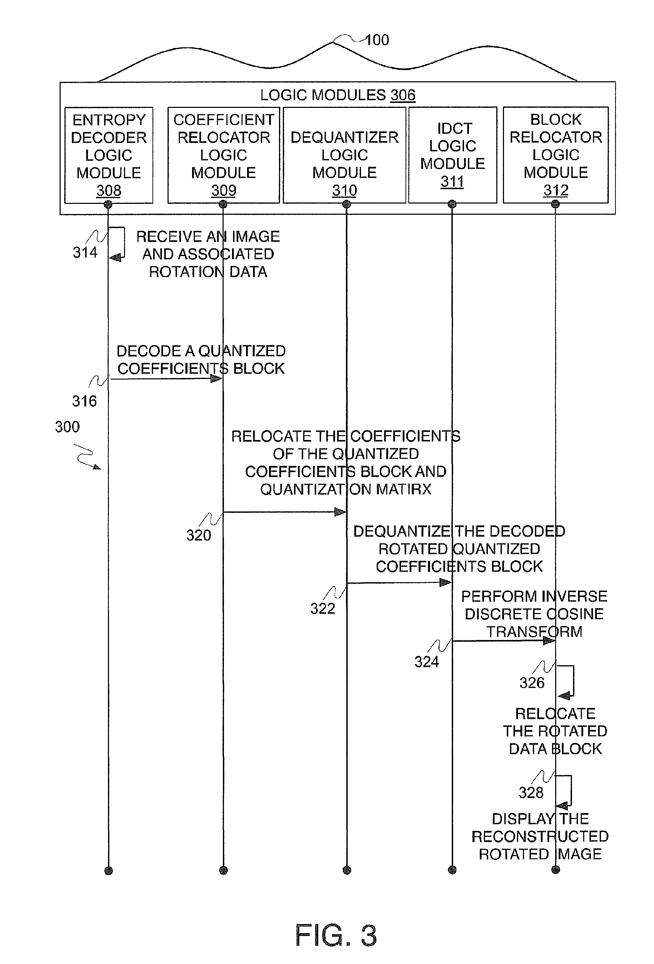

In some examples, decoder 104 may be configured to decode the image, and rotate the image based at least in part on the rotation data, where at least a portion of the rotation may be performed during the decoding of the image. For example, decoder 104 may include one or more modules (illustrated by image rotation module 106) capable of performing rotation during the decoding of the image. Such a decoded and rotated image may be stored via memory store 108 and may be displayed via display device 110. In some examples, image rotation module 106 may include all or portions of logic modules 306 described in greater detail below in Fig. 3.

In some implementations, decoder 104 and/or logic modules 306 may be implemented as part of a device taking the images, such as a digital camera, a smart phone, a tablet computer, and/or the like. In other implementations, decoder 104 and/or logic modules 306 may be implemented apart from the device taking the images, such as a home computer or laptop receiving un-rotated images taken by the imaging device. Accordingly, decoding and rotation system 100 may be implemented as a digital camera, a smart phone, a tablet computer, a home computer, a laptop, and/or the like.

In operation, decoding and rotation system 100 may implement operations for decoding and rotation on a data block-by-data block basis. The decoding and the rotating may be performed without storing the decoded image in memory 108 between the decoding and the rotating.

Illustrated in dashed lines is a conventional image rotation module 112. As illustrated, conventional image rotation module 112 may not be implemented as part of decoder 104. Accordingly, conventional image rotation module 112 may not be capable of rotating the image during the decoding of the image. Similarly, conventional image rotation module 112 may not be capable of rotating after decoding without first storing the decoded image in memory 108 between the decoding and the rotating. Lastly, conventional image rotation module 112 typically may operate on a pixel-by-pixel basis, instead of on a data block-by-data block basis.

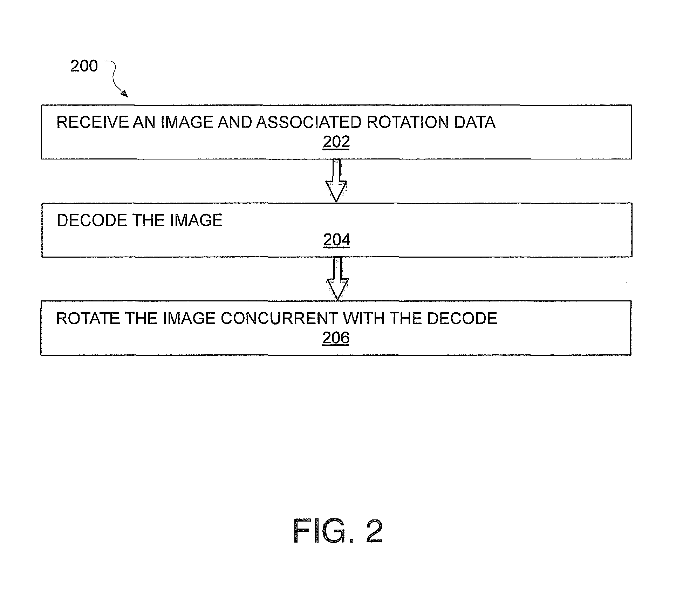

As will be discussed in greater detail below, decoding and rotation system 100 may be used to perform some or all of the various functions discussed below in connection with Figs. 2 and/or 3.

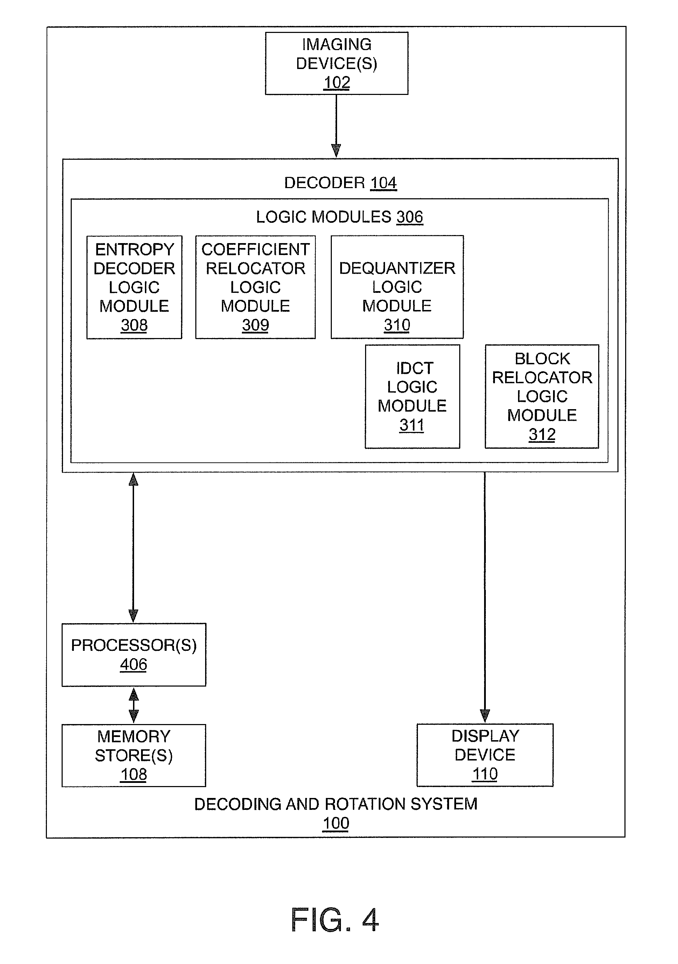

FIG. 2 is a flow chart illustrating an example decoding and rotation process 200, arranged in accordance with at least some implementations of the present disclosure. In the illustrated implementation, process 200 may include one or more operations, functions or actions as illustrated by one or more of blocks 202, 204, and/or 206. By way of non-limiting example, process 200 will be described herein with reference to example decoding and rotation system 100 of FIG. 1 and/or 4.

Process 200 may be utilized as a computer-implemented method for concurrent image decoding and rotation. Process 200 may begin at block 202, "RECEIVE AN IMAGE AND ASSOCIATED ROTATION DATA", where an image may be received. For example, an image may be received, where rotation data may be associated with the image. As discussed above, the image may be a JPEG still image, an MPEG video image, the like, and/or combinations thereof.

Processing may continue from operation 202 to operation 204, "DECODE THE IMAGE", where the image may be decoded.

Processing may continue from operation 204 to operation 206, "ROTATE THE IMAGE CONCURRENT WITH THE DECODE", where the image may be rotated. For example, the image may be rotated based at least in part on the rotation data. In some implementations, at least a portion of the rotation may be performed during the decoding of the image.

Some additional and/or alternative details related to process 200 may be illustrated in one or more examples of implementations discussed in greater detail below with regard to FIG. 3.

FIG. 3 is an illustrative diagram of example decoding and rotation system 100 and decoding and rotation process 300 in operation, arranged in accordance with at least some implementations of the present disclosure. In the illustrated implementation, process 300 may include one or more operations, functions or actions as illustrated by one or more of actions 314, 316, 318, 320, 322, 324, 326, and/or 328. By way of non-limiting example, process 300 will be described herein with reference to example decoding and rotation system 100 of FIG. 1 and/or 4.

In the illustrated implementation, decoding and rotation system 100 may include logic modules 306, the like, and/or combinations thereof. For example, logic modules 306, may include an entropy decoder logic module 308, a coefficient relocator logic module 309, a dequantizer logic module 310, an inverse discrete cosine transform logic module 311, a block relocator logic module 312, the like, and/or combinations thereof. Although decoding and rotation system 100, as shown in FIG. 3, may include one particular set of blocks or actions associated with particular modules, these blocks or actions may be associated with different modules than the particular module illustrated here.

Process 300 may be utilized as a computer-implemented method for concurrent image decoding and rotation. Process 200 may begin at block 314, "RECEIVE AN IMAGE AND ASSOCIATED ROTATION DATA", where an image may be received. For example, an image may be received, where rotation data may be associated with the image. As discussed above, the image may be a JPEG still image, an MPEG video image, the like, and/or combinations thereof.

As will be described in greater detail below, the decoding and the rotating of the image via process 300 may include one or more of operations 316, 320, 322, 324, and/or 326, the like, or combinations thereof. Although process 300, as illustrated, is directed to decoding, the concepts and/or operations described may be applied in the same or similar manner to coding in general, including in encoding.

Processing may continue from operation 314 to operation 316, "DECODE A QUANTIZED COEFFICIENTS BLOCK" where, a quantized coefficients block may be decoded. For example, a quantized coefficients block may be decoded, via entropy decoder logic module 308. In some examples, the quantized coefficients block may contain a plurality of quantized discrete cosine transform coefficients. In some examples, entropy decoder logic module 308 may decode a zig-zag sequence of quantized discrete cosine transform (DCT) coefficients using a Huffman table.

Processing may continue from operation 316 to operation 320, "RELOCATE THE COEFFICIENTS OF THE QUANTIZED COEFFICIENTS BLOCK AND QUANTIZATION MATRIX" where, the coefficients of the quantized coefficients block and the quantization matrix may be relocated. For example, the coefficients of the quantized coefficients block may be relocated into a rotated quantized coefficients block based at least in part on the rotation data, via coefficient relocator logic module 309. In some implementations, after dequantization, an 8x8 block of coefficients (or other size of block, for example) may be relocated according to the orientation degrees. In some examples, relocation of the coefficients of the quantized coefficients block in a frequency domain and the quantization matrix may be performed by coefficient relocator logic module 309.

In some implementations, the rearrangement of DCT coefficients in an 8x8 block may include relocation using the following equations for a given orientation of the input image.

90 degree rotation: transpose X and Y of the DCT coefficients, then negate the coefficients in odd columns (i.e., 1, 3, 5, 7 columns);                    (1)

180 degree rotation: negate the coefficients in odd columns in even rows (i.e., 0, 2, 4, 6 rows), then negate the even columns in odd rows;                    (2)

270 degree rotation: transpose X and Y of the DCT coefficients, then negate the coefficients in odd rows; and                    (3)

0 degree rotation: no change                    (4)

In the above equations, X and Y may represent the original horizontal and vertical locations in an 8x8 DCT coefficient block. The range of X and Y is from 0 to 7 in such an example.

In some implementations, the relocation of the quantization matrix may include relocation using the following equations for a given orientation of the input image.

$$90 \text{ degree rotation: } X_{out} = Y_{in}, Y_{out} = X_{in}; \qquad (5)$$

$$180 \text{ degree rotation: } X_{out} = X_{in}, Y_{out} = Y_{in} \quad ; \qquad (6)$$

$$270 \text{ degree rotation: } X_{out} = Y_{in}, Y_{out} = X_{in}; \text{ and} \qquad (7)$$

$$0 \text{ degree rotation: } X_{out} = X_{in}, Y_{out} = Y_{in} \qquad (8)$$

In the above equations, Xin and Yin may represent the original horizontal and vertical locations in 8x8 quantization matrix elements, and Xout and Yout may represent the element locations after relocation. The range of X and Y may be from 0 to 7 in such an example

Processing may continue from operation 320 to operation 322, "DEQUANTIZE THE DECODED ROTATED QUANTIZED COEFFICIENTS BLOCK" where, the decoded rotated quantized coefficients block may be dequantized. For example, the decoded rotated quantized coefficients block may be dequantized, via dequantizer logic module 310, into a rotated dequantized coefficients block based at least in part on the relocated quantization matrix. In some examples, the decoded coefficients may be dequantized using the relocated quantization matrix, and the outputs are called DCT coefficients.

Processing may continue from operation 322 to operation 324, "PERFORM INVERSE DISCRETE COSINE TRANSFORM" where, inverse discrete cosine transform (IDCT) may be performed. For example, a rotated data block may be determined, via inverse discrete cosine transform (IDCT) logic module 311, by performing an inverse discrete cosine transform based at least in part on the rotated dequantized coefficients block. In some implementations, the determination of the rotated data block may be performed in a pixel domain. In some examples, the DCT coefficients may be transformed to an 8x8 block of samples by the inverse DCT (IDCT) logic module 311.

Processing may continue from operation 324 to operation 326, "RELOCATE THE ROTATED DATA BLOCK" where, the rotated data block may be relocated. For example, the rotated data block may be relocated, via block relocator logic module 312, into a reconstructed rotated image based at least in part on the rotation data. The reconstructed rotated image may be stored via memory stores (not shown) and/or may be displayed via display (not shown). In some examples, the location of the reconstructed 8x8 blocks may be decided by block relocator logic module 312 according to the orientation degrees.

In some implementations, the rearrangement the 8x8 blocks after IDCT may include relocation using the following equations for a given orientation of the input image.

$$90 \text{ degree rotation: Xout} = V - Yin, \text{ Yout} = Xin; \qquad (9)$$

$$180 \text{ degree rotation: Xout} = H - Xin, \text{ Yout} = V - Yin; \qquad (10)$$

$$270 \text{ degree rotation: Xout} = Yin, \text{ Yout} = H - Xin; \text{ and} \qquad (11)$$

$$0 \text{ degree rotation: Xout} = Xin, \text{ Yout} = Yin \qquad (12)$$

In the above equations, Xin and Yin may represent the original horizontal and vertical block location in the image, and Xout and Yout may represent the block locations after rotation. H and V may represent the number of blocks in width and height of the image. Xin may range from 1 to H, and Yin may range from 1 to V in such an example.

Processing may continue from operation 326 to operation 328, "DISPLAY THE RECONSTRUCTED ROTATED IMAGE" where, the reconstructed rotated image may be displayed. For example, the reconstructed rotated image may be displayed on a display device (not shown).

In operation, process 300 may perform the decoding and the rotating on a data block-by-data block basis. The decoding and the rotating may be performed without storing the decoded image between the decoding and the rotating.

While implementation of example processes 200 and 300, as illustrated in FIGS. 2 and 3, may include the undertaking of all blocks shown in the order illustrated, the present disclosure is not limited in this regard and, in various examples, implementation of processes 200 and 300 may include the undertaking only a subset of the blocks shown and/or in a different order than illustrated.

In addition, any one or more of the blocks of FIGS. 2 and 3 may be undertaken in response to instructions provided by one or more computer program products. Such program products may include signal bearing media providing instructions that, when executed by, for example, a processor, may provide the functionality described herein. The computer program products may be provided in any form of computer readable medium. Thus, for example, a processor including one or more processor core(s) may undertake one or more of the blocks shown in FIGS. 2 and 3 in response to instructions conveyed to the processor by a computer readable medium.

As used in any implementation described herein, the term "module" refers to any combination of software, firmware and/or hardware configured to provide the functionality described herein. The software may be embodied as a software package, code and/or instruction set or instructions, and "hardware", as used in any implementation described herein, may include, for example, singly or in any combination, hardwired circuitry, programmable circuitry, state machine circuitry, and/or firmware that stores instructions executed by programmable circuitry. The modules may, collectively or individually, be embodied as circuitry that forms part of a larger system, for example, an integrated circuit (IC), system on-chip (SoC), and so forth.

FIG. 4 is an illustrative diagram of an example decoding and rotation system 100, arranged in accordance with at least some implementations of the present disclosure. In the illustrated implementation, decoding and rotation system 100 may include one or more imaging devices 102, decoder 104, display 110, and/or logic modules 306, one or more processors 406, and/or one or more memory stores 108. Logic modules 306 may include entropy decoder logic module 308, coefficient relocator logic module 309, dequantizer logic module 310, inverse discrete cosine transform logic module 311, block relocator logic module 312, the like, and/or combinations thereof.

As illustrated, display 110, decoder 104, processor 406 and/or memory store 108 may be capable of communication with one another and/or communication with portions of logic modules 306. Similarly, imaging device(s) 102 may be capable of communication with decoder 104 and/or portions of logic modules 306. Accordingly, decoder 104 may include all or portions of logic modules 306. Although decoding and rotation system 100, as shown in FIG. 4, may include one particular set of blocks or actions associated with particular modules, these blocks or actions may be associated with different modules than the particular module illustrated here.

In some examples, display device 110 may be configured to present a reconstructed rotated image. Processors 406 may be communicatively coupled to display device 110. Memory stores 108 may be communicatively coupled to processors 406.

Entropy decoder logic module 308 may be communicatively coupled to imaging device(s) 102 and configured to receive an image and associated rotation data. Entropy decoder logic module 308 may be configured to decode a quantized coefficients block. For example, the quantized coefficients block may contain a plurality of quantized discrete cosine transform coefficients.

Coefficient relocator logic module 309 may be communicatively coupled to entropy decoder logic module 308 and may be configured to rotate a quantization matrix based at least in part on the rotation data. Coefficient relocator logic module 309 also may be configured to relocate the coefficients of the quantized coefficients block into a rotated quantized coefficients block based at least in part on the rotation data. For example, the relocation of the coefficients of the quantized coefficients block may be performed in a frequency domain.

Dequantizer logic module 310 may be communicatively coupled to coefficient relocator logic module 309 and may be configured to dequantize the decoded rotated quantized coefficients block into a rotated dequantized coefficients block based at least in part on the relocated quantization matrix.

Inverse discrete cosine transform logic module 311 may be communicatively coupled to dequantizer logic module 310 and may be configured to determine a rotated data block by performing an inverse discrete cosine transform based at least in part on the rotated quantized coefficients block. For example, the determination of the rotated data block may be performed in a pixel domain.

Block relocator logic module 312 may be communicatively coupled to inverse discrete cosine transform logic module 311and may be configured to relocate the rotated data block into a reconstructed rotated image based at least in part on the rotation data. The reconstructed rotated image may be stored via memory stores 108 and/or may be displayed via display 110.

In various embodiments, entropy decoder logic module 308, dequantizer logic module 310, coefficient relocator logic module 309, inverse discrete cosine transform logic module 311, and/or block relocator logic module 312 may be implemented in hardware, while software may implement other logic modules. For example, in some embodiments, entropy decoder logic module 308, dequantizer logic module 310, coefficient relocator logic module 309, inverse discrete cosine transform logic module 311, and/or block relocator logic module 312 may be implemented by application-specific integrated circuit (ASIC) logic while other logic modules may be provided by software instructions executed by logic such as processors 406. However, the present disclosure is not limited in this regard and entropy decoder logic module 308, dequantizer logic module 310, coefficient relocator logic module 309, inverse discrete cosine transform logic module 311, and/or block relocator logic module 312 may be implemented by any combination of hardware, firmware and/or software. In addition, memory stores 108 may be any type of memory such as volatile memory (e.g., Static Random Access Memory (SRAM), Dynamic Random Access Memory (DRAM), etc.) or non-volatile memory (e.g., flash memory, etc.), and so forth. In a non-limiting example, memory stores 108 may be implemented by cache memory.

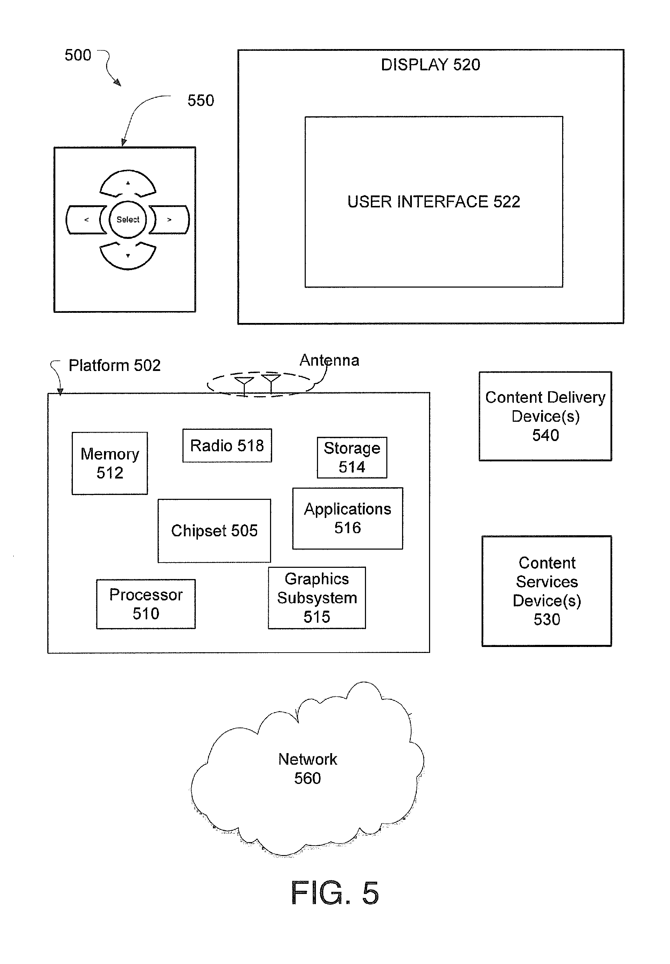

FIG. 5 illustrates an example system 500 in accordance with the present disclosure. In various implementations, system 500 may be a media system although system 500 is not limited to this context. For example, system 500 may be incorporated into a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

In various implementations, system 500 includes a platform 502 coupled to a display 520. Platform 502 may receive content from a content device such as content services device(s) 530 or content delivery device(s) 540 or other similar content sources. A navigation controller 550 including one or more navigation features may be used to interact with, for example, platform 502 and/or display 520. Each of these components is described in greater detail below.

In various implementations, platform 502 may include any combination of a chipset 505, processor 510, memory 512, storage 514, graphics subsystem 515, applications 516 and/or radio 518. Chipset 505 may provide intercommunication among processor 510, memory 512, storage 514, graphics subsystem 515, applications 516 and/or radio 518. For example, chipset 505 may include a storage adapter (not depicted) capable of providing intercommunication with storage 514.

Processor 510 may be implemented as a Complex Instruction Set Computer (CISC) or Reduced Instruction Set Computer (RISC) processors; x86 instruction set compatible processors, multi- core, or any other microprocessor or central processing unit (CPU) . In various implementations, processor 510 may be dual- core processor (s), dual-core mobile processor (s), and so forth.

Memory 512 may be implemented as a volatile memory device such as, but not limited to, a Random Access Memory (RAM), Dynamic Random Access Memory (DRAM), or Static RAM (SRAM).

Storage 514 may be implemented as a non-volatile storage device such as, but not limited to, a magnetic disk drive, optical disk drive, tape drive, an internal storage device, an attached storage device, flash memory, battery backed-up SDRAM (synchronous DRAM), and/or a network accessible storage device. In various implementations, storage 514 may include technology to increase the storage performance enhanced protection for valuable digital media when multiple hard drives are included, for example.

Graphics subsystem 515 may perform processing of images such as still or video for display. Graphics subsystem 515 may be a graphics processing unit (GPU) or a visual processing unit (VPU), for example. An analog or digital interface may be used to communicatively couple graphics subsystem 515 and display 520. For example, the interface may be any of a High-Definition Multimedia Interface, Display Port, wireless HDMI, and/or wireless HD compliant techniques. Graphics subsystem 515 may be integrated into processor 510 or chipset 505. In some implementations, graphics subsystem 515 may be a stand-alone card communicatively coupled to chipset 505.

The graphics and/or video processing techniques described herein may be implemented in various hardware architectures. For example, graphics and/or video functionality may be integrated within a chipset. Alternatively, a discrete graphics and/or video processor may be used. As still another implementation, the graphics and/or video functions may be provided by a general purpose processor, including a multi-core processor. In further embodiments, the functions may be implemented in a consumer electronics device.

Radio 518 may include one or more radios capable of transmitting and receiving signals using various suitable wireless communications techniques. Such techniques may involve communications across one or more wireless networks. Example wireless networks include (but are not limited to) wireless local area networks (WLANs), wireless personal area networks (WPANs), wireless metropolitan area network (WMANs), cellular networks, and satellite networks. In communicating across such networks, radio 518 may operate in accordance with one or more applicable standards in any version.

In various implementations, display 520 may include any television type monitor or display. Display 520 may include, for example, a computer display screen, touch screen display, video monitor, television-like device, and/or a television. Display 520 may be digital and/or analog. In various implementations, display 520 may be a holographic display. Also, display 520 may be a transparent surface that may receive a visual projection. Such projections may convey various forms of information, images, and/or objects. For example, such projections may be a visual overlay for a mobile augmented reality (MAR) application. Under the control of one or more software applications 516, platform 502 may display user interface 522 on display 520.

In various implementations, content services device(s) 530 may be hosted by any national, international and/or independent service and thus accessible to platform 502 via the Internet, for example. Content services device(s) 530 may be coupled to platform 502 and/or to display 520. Platform 502 and/or content services device(s) 530 may be coupled to a network 560 to communicate (e.g., send and/or receive) media information to and from network 560. Content delivery device(s) 540 also may be coupled to platform 502 and/or to display 520.

In various implementations, content services device(s) 530 may include a cable television box, personal computer, network, telephone, Internet enabled devices or appliance capable of delivering digital information and/or content, and any other similar device capable of unidirectionally or bidirectionally communicating content between content providers and platform 502 and/display 520, via network 560 or directly. It will be appreciated that the content may be communicated unidirectionally and/or bidirectionally to and from any one of the components in system 500 and a content provider via network 560. Examples of content may include any media information including, for example, video, music, medical and gaming information, and so forth.

Content services device(s) 530 may receive content such as cable television programming including media information, digital information, and/or other content. Examples of content providers may include any cable or satellite television or radio or Internet content providers. The provided examples are not meant to limit implementations in accordance with the present disclosure in any way.

In various implementations, platform 502 may receive control signals from navigation controller 550 having one or more navigation features. The navigation features of controller 550 may be used to interact with user interface 522, for example. In embodiments, navigation controller 550 may be a pointing device that may be a computer hardware component (specifically, a human interface device) that allows a user to input spatial (e.g., continuous and multi-dimensional) data into a computer. Many systems such as graphical user interfaces (GUI), and televisions and monitors allow the user to control and provide data to the computer or television using physical gestures.

Movements of the navigation features of controller 550 may be replicated on a display (e.g., display 520) by movements of a pointer, cursor, focus ring, or other visual indicators displayed on the display. For example, under the control of software applications 516, the navigation features located on navigation controller 550 may be mapped to virtual navigation features displayed on user interface 522, for example. In embodiments, controller 550 may not be a separate component but may be integrated into platform 502 and/or display 520. The present disclosure, however, is not limited to the elements or in the context shown or described herein.

In various implementations, drivers (not shown) may include technology to enable users to instantly turn on and off platform 502 like a television with the touch of a button after initial boot-up, when enabled, for example. Program logic may allow platform 502 to stream content to media adaptors or other content services device(s) 530 or content delivery device(s) 540 even when the platform is turned "off." In addition, chipset 505 may include hardware and/or software support for (6.1) surround sound audio and/or high definition (7.1) surround sound audio, for example. Drivers may include a graphics driver for integrated graphics platforms. In embodiments, the graphics driver may comprise a peripheral component interconnect (PCI) Express graphics card.

In various implementations, any one or more of the components shown in system 500 may be integrated. For example, platform 502 and content services device(s) 530 may be integrated, or platform 502 and content delivery device (s) 540 may be integrated, or platform 502, content services device(s) 530, and content delivery device(s) 540 may be integrated, for example. In various embodiments, platform 502 and display 520 may be an integrated unit. Display 520 and content service device(s) 530 may be integrated, or display 520 and content delivery device(s) 540 may be integrated, for example. These examples are not meant to limit the present disclosure.

In various embodiments, system 500 may be implemented as a wireless system, a wired system, or a combination of both. When implemented as a wireless system, system 500 may include components and interfaces suitable for communicating over a wireless shared media, such as one or more antennas, transmitters, receivers, transceivers, amplifiers, filters, control logic, and so forth. An example of wireless shared media may include portions of a wireless spectrum, such as the RF spectrum and so forth. When implemented as a wired system, system 500 may include components and interfaces suitable for communicating over wired communications media, such as input/output (I/O) adapters, physical connectors to connect the I/O adapter with a corresponding wired communications medium, a network interface card (NIC), disc controller, video controller, audio controller, and the like. Examples of wired communications media may include a wire, cable, metal leads, printed circuit board (PCB), backplane, switch fabric, semiconductor material, twisted-pair wire, co-axial cable, fiber optics, and so forth.

Platform 502 may establish one or more logical or physical channels to communicate information. The information may include media information and control information. Media information may refer to any data representing content meant for a user. Examples of content may include, for example, data from a voice conversation, videoconference, streaming video, electronic mail ("email") message, voice mail message, alphanumeric symbols, graphics, image, video, text and so forth. Data from a voice conversation may be, for example, speech information, silence periods, background noise, comfort noise, tones and so forth. Control information may refer to any data representing commands, instructions or control words meant for an automated system. For example, control information may be used to route media information through a system, or instruct a node to process the media information in a predetermined manner. The embodiments, however, are not limited to the elements or in the context shown or described in FIG. 5.

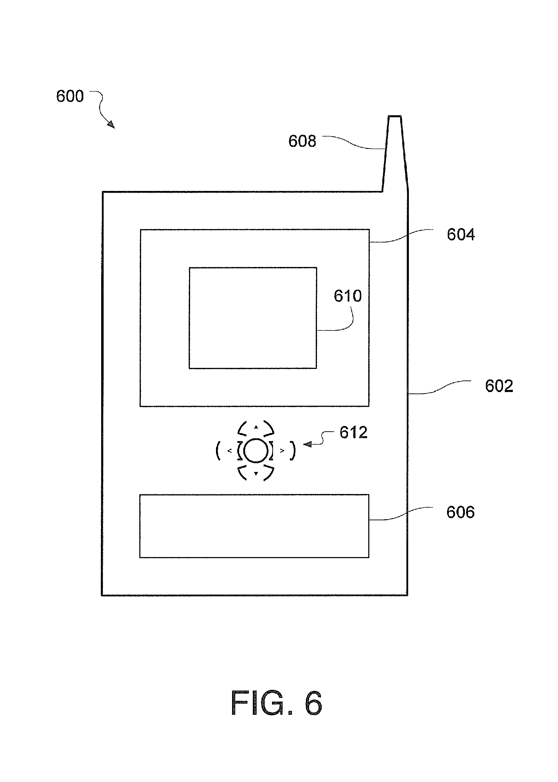

As described above, system 500 may be embodied in varying physical styles or form factors. FIG. 6 illustrates implementations of a small form factor device 600 in which system 500 may be embodied. In embodiments, for example, device 600 may be implemented as a mobile computing device having wireless capabilities. A mobile computing device may refer to any device having a processing system and a mobile power source or supply, such as one or more batteries, for example.

As described above, examples of a mobile computing device may include a personal computer (PC), laptop computer, ultra-laptop computer, tablet, touch pad, portable computer, handheld computer, palmtop computer, personal digital assistant (PDA), cellular telephone, combination cellular telephone/PDA, television, smart device (e.g., smart phone, smart tablet or smart television), mobile internet device (MID), messaging device, data communication device, and so forth.

Examples of a mobile computing device also may include computers that are arranged to be worn by a person, such as a wrist computer, finger computer, ring computer, eyeglass computer, belt-clip computer, arm-band computer, shoe computers, clothing computers, and other wearable computers. In various embodiments, for example, a mobile computing device may be implemented as a smart phone capable of executing computer applications, as well as voice communications and/or data communications. Although some embodiments may be described with a mobile computing device implemented as a smart phone by way of example, it may be appreciated that other embodiments may be implemented using other wireless mobile computing devices as well. The embodiments are not limited in this context.

As shown in FIG. 6, device 600 may include a housing 602, a display 604, an input/output (I/O) device 606, and an antenna 608. Device 600 also may include navigation features 612. Display 604 may include any suitable display unit for displaying information appropriate for a mobile computing device. I/O device 606 may include any suitable I/O device for entering information into a mobile computing device. Examples for I/O device 606 may include an alphanumeric keyboard, a numeric keypad, a touch pad, input keys, buttons, switches, rocker switches, microphones, speakers, voice recognition device and software, and so forth. Information also may be entered into device 600 by way of microphone (not shown). Such information may be digitized by a voice recognition device (not shown). The embodiments are not limited in this context.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the spirit and scope of the present disclosure.

The following examples pertain to further embodiments.

In one example, a computer-implemented method for concurrent image decoding and rotation may include receiving an image, where rotation data may be associated with the image. The image may be decoded and rotated. The rotation of the image may be based at least in part on the rotation data. At least a portion of the rotation may be performed during the decoding of the image.

In a still further example, the decoding and the rotating of the image may include decoding, via an entropy decoder logic module, a quantized coefficients block, where the quantized coefficients block contains a plurality of quantized discrete cosine transform coefficients. A quantization matrix may be rotated based at least in part on the rotation data, via a dequantizer logic module. The coefficients of the quantized coefficients block may be relocated into a rotated quantized coefficients block based at least in part on the rotation data, via a coefficient relocator logic module, where the relocation of the coefficients of the quantized coefficients block may be performed in a frequency domain. The decoded rotated quantized coefficients block may be dequantized, via the dequantizer logic module, into a dequantized rotated coefficients block based at least in part on the relocated quantization matrix. A rotated data block may be determined, via an inverse discrete cosine transform logic module, by performing an inverse discrete cosine transform based at least in part on the rotated quantized coefficients block, where the determination of the rotated data block may be performed in a pixel domain. The rotated data block may be relocated, via a block relocator logic module, into a reconstructed rotated image based at least in part on the rotation data. The reconstructed rotated image may be displayed on a display device. The image may be a JPEG still image, an MPEG video image, the like, and/or combinations thereof. The decoding and the rotating may be performed on a data block-by-data block basis. The decoding and the rotating may be performed without storing the decoded image between the decoding and the rotating.

In other examples, a system for concurrent image decoding and rotation on a computer may include a display device, one or more processors, one or more memory stores a decoder, the like, and/or combinations thereof. The display device may be configured to present a decoded and rotated image. The one or more processors communicatively may be coupled to the display device. The one or more memory stores may be communicatively coupled to the one or more processors. The decoder may be communicatively coupled to the one or more processors and may be configured to receive an image, where rotation data may be associated with the image. The decoder may be configured to decode the image, and rotate the image based at least in part on the rotation data, where at least a portion of the rotation may be performed during the decoding of the image.

In another example, the decoder may include an entropy decoder logic module, a dequantizer logic module, a coefficient relocator logic module, an inverse discrete cosine transform logic module, a block relocator logic module, the like, and/or combinations thereof. The entropy decoder logic module may be configured to decode a quantized coefficients block, where the quantized coefficients block contains a plurality of quantized discrete cosine transform coefficients. The coefficient relocator logic module may be configured to rotate a quantization matrix based at least in part on the rotation data and may be configured to relocate the coefficients of the quantized coefficients block into a rotated quantized coefficients block based at least in part on the rotation data, where the relocation of the coefficients of the quantized coefficients block may be performed in a frequency domain. The dequantizer logic module may be configured to dequantize the decoded rotated quantized coefficients block into a quantized coefficients block based at least in part on the relocated quantization matrix. The inverse discrete cosine transform logic module may be configured to determine a rotated data block by performing an inverse discrete cosine transform based at least in part on the rotated quantized coefficients block, where the determination of the rotated data block may be performed in a pixel domain. The block relocator logic module may be configured to relocate the rotated data block into a reconstructed rotated image based at least in part on the rotation data. In operation, the display device may be configured to display the reconstructed rotated image. The image may be a JPEG still image, an MPEG video image, the like, and/or combinations thereof. The decoding and the rotating may be performed on a data block-by-data block basis. The decoding and the rotating may be performed without storing the decoded image between the decoding and the rotating.

In a further example, at least one machine readable medium may include a plurality of instructions that in response to being executed on a computing device, causes the computing device to perform the method according to any one of the above examples.

In a still further example, an apparatus may include means for performing the methods according to any one of the above examples.

The above examples may include specific combination of features. However, such the above examples are not limited in this regard and, in various implementations, the above examples may include the undertaking only a subset of such features, undertaking a different order of such features, undertaking a different combination of such features, and/or undertaking additional features than those features explicitly listed. For example, all features described with respect to the example methods may be implemented with respect to the example apparatus, the example systems, and/or the example articles, and *vice versa.*

The invention may refer to one or more of the following examples.

1. A computer-implemented method for concurrent image decoding and rotation, comprising:

   receiving an image, wherein rotation data is associated with the image;
   decoding the image; and
   rotating the image based at least in part on the rotation data, wherein at least a portion of the rotation is performed during the decoding of the image.

2. The method of example 1, wherein the image is a JPEG still image.

3. The method of example 1, wherein the image is an MPEG video image.

4. The method of example 1, wherein the decoding and the rotating are performed without storing the decoded image between the decoding and the rotating

5. The method of example 1, wherein the decoding and the rotating are performed on a data block-by-data block basis.

6. The method of example 1, wherein the decoding and the rotating of the image further comprises:

   relocating a quantization matrix based at least in part on the rotation data; and
   dequantizing a decoded quantized coefficients block into a dequantized coefficients block based at least in part on the relocated quantization matrix.

7. The method of example 1, wherein the decoding and the rotating of the image further comprises:

   decoding a quantized coefficients block, wherein the quantized coefficients block contains a plurality of quantized discrete cosine transform coefficients;
   relocating a quantization matrix based at least in part on the rotation data; and
   dequantizing the decoded quantized coefficients block into a dequantized coefficients block based at least in part on the relocated quantization matrix.

8. The method of example 1, wherein the decoding and the rotating of the image further comprise:

relocating the coefficients of a quantized coefficients block into a rotated quantized coefficients block based at least in part on the rotation data.

9. The method of example 1, wherein the decoding and the rotating of the image further comprises:

relocating the coefficients of a quantized coefficients block into a rotated quantized coefficients block based at least in part on the rotation data, wherein the relocation of the coefficients of the quantized coefficients block is performed in a frequency domain.

10. The method of example 1, wherein the decoding and the rotating of the image further comprises:

determining a rotated data block by performing an inverse discrete cosine transform based at least in part on a rotated dequantized coefficients block.

11. The method of example 1, wherein the decoding and the rotating of the image further comprises:

determining a rotated data block by performing an inverse discrete cosine transform based at least in part on a rotated dequantized coefficients block, wherein the determination of the rotated data block is performed in a pixel domain.

12. The method of example 1, wherein the decoding and the rotating of the image further comprises:

relocating a rotated data block into a reconstructed rotated image based at least in part on the rotation data; and displaying the reconstructed rotated image on a display device.

13. The method of example 1, wherein the decoding and the rotating of the image further comprises:

decoding, via an entropy decoder logic module, a quantized coefficients block, wherein the quantized coefficients block contains a plurality of quantized discrete cosine transform coefficients;
relocating, via a coefficient relocator logic module, a quantization matrix based at least in part on the rotation data;
relocating, via the coefficient relocator logic module, the coefficients of the quantized coefficients block into a rotated quantized coefficients block based at least in part on the rotation data, wherein the relocation of the coefficients of the quantized coefficients block is performed in a frequency domain;
dequantizing, via the dequantizer logic module, the decoded rotated quantized coefficients block into a rotated dequantized coefficients block based at least in part on the relocated quantization matrix;
determining, via an inverse discrete cosine transform logic module, a rotated data block by performing an inverse discrete cosine transform based at least in part on the rotated dequantized coefficients block, wherein the determination of the rotated data block is performed in a pixel domain;
relocating, via a block relocator logic module, the rotated data block into a reconstructed rotated image based at least in part on the rotation data; and
displaying the reconstructed rotated image on a display device,
wherein the image is a JPEG still image or an MPEG video image,
wherein the decoding and the rotating are performed on a data block-by-data block basis,
wherein the decoding and the rotating are performed without storing the decoded image between the decoding and the rotating.

14. A system for concurrent image decoding and rotation on a computer, comprising:

a display device configured to present a decoded and rotated image;
one or more processors communicatively coupled to the display device;
one or more memory stores communicatively coupled to the one or more processors; and
a decoder communicatively coupled to the one or more processors and configured to:

receive an image, wherein rotation data is associated with the image,

decode the image, and

rotate the image based at least in part on the rotation data, wherein at least a portion of the rotation is performed during the decoding of the image.

15. The system of example 14, wherein the image is a JPEG still image.

16. The system of example 14, wherein the image is an MPEG video image.

17. The system of example 14, wherein the decoding and the rotating are performed without storing the decoded image between the decoding and the rotating

18. The system of example 14, wherein the decoding and the rotating are performed on a data block-by-data block basis.

19. The system of example 14, wherein the decoder comprises:

a dequantizer logic module dequantize a decoded quantized coefficients block into a dequantized coefficients block based at least in part on a relocated quantization matrix.

20. The system of example 14, wherein the decoder comprises:

an entropy decoder logic module configured to decode a quantized coefficients block, wherein the quantized coefficients block contains a plurality of quantized discrete cosine transform coefficients; and a dequantizer logic module configured to dequantize the decoded quantized coefficients block into a dequantized coefficients block based at least in part on a relocated quantization matrix.

21. The system of example 14, wherein the decoder comprises:

a coefficient relocator logic module configured to relocate a quantization matrix based at least in part on the rotation data and configured to relocate coefficients of a quantized coefficients block into a rotated quantized coefficients block based at least in part on the rotation data.

22. The system of example 14, wherein the decoder comprises:

a coefficient relocator logic module configured to relocate a quantization matrix based at least in part on the rotation data and configured to relocate coefficients of a quantized coefficients block into a rotated quantized coefficients block based at least in part on the rotation data, wherein the relocation of the coefficients of the quantized coefficients block is performed in a frequency domain.

23. The system of example 14, wherein the decoder comprises:

an inverse discrete cosine transform logic module configured to determine a rotated data block by performing an inverse discrete cosine transform based at least in part on a rotated dequantized coefficients block.

24. The system of example 14, wherein the decoder comprises:

an inverse discrete cosine transform logic module configured to determine a rotated data block by performing an inverse discrete cosine transform based at least in part on a rotated dequantized coefficients block, wherein the determination of the rotated data block is performed in a pixel domain.

25. The system of example 14, wherein the decoder comprises:

a block relocator logic module configured to relocate a rotated data block into a reconstructed rotated image based at least in part on the rotation data, and wherein the display device is configured to display the reconstructed rotated image.

26. The system of example 14, wherein the decoder comprises:

an entropy decoder logic module configured to decode a quantized coefficients block, wherein the quantized coefficients block contains a plurality of quantized discrete cosine transform coefficients;

a coefficient relocator logic module configured to relocate a quantization matrix based at least in part on the rotation data and configured to relocate the coefficients of the quantized coefficients block into a rotated quantized coefficients block based at least in part on the rotation data, wherein the relocation of the coefficients of the quantized coefficients block is performed in a frequency domain;

a dequantizer logic module configured to dequantize the decoded rotated quantized coefficients block into a rotated dequantized coefficients block based at least in part on the relocated quantization matrix;

an inverse discrete cosine transform logic module configured to determine a rotated data block by performing an inverse discrete cosine transform based at least in part on the rotated dequantized coefficients block, wherein the determination of the rotated data block is performed in a pixel domain; and

a block relocator logic module configured to relocate the rotated data block into a reconstructed rotated image based at least in part on the rotation data,

wherein the display device is configured to display the reconstructed rotated image,

wherein the image is a JPEG still image or an MPEG video image,

wherein the decoding and the rotating are performed on a data block-by-data block basis,

wherein the decoding and the rotating are performed without storing the decoded image between the decoding and the rotating.

27. An apparatus for concurrent image decoding and rotation, comprising:

a decoder, the decoder configured to:

receive an image, wherein rotation data is associated with the image;
decode the image; and
rotate the image based at least in part on the rotation data, wherein at least a portion of the rotation is performed during the decoding of the image.

28. The apparatus of example 27, wherein the decoder comprises:

an entropy decoder logic module configured to decode a quantized coefficients block, wherein the quantized coefficients block contains a plurality of quantized discrete cosine transform coefficients;

a coefficient relocator logic module configured to relocate a quantization matrix based at least in part on the rotation data and configured to relocate the coefficients of the quantized coefficients block into a rotated quantized coefficients block based at least in part on the rotation data, wherein the relocation of the coefficients of the quantized coefficients block is performed in a frequency domain;

a dequantizer logic module configured to dequantize the decoded rotated quantized coefficients block into a dequantized coefficients block based at least in part on the relocated quantization matrix;

an inverse discrete cosine transform logic module configured to determine a rotated data block by performing an inverse discrete cosine transform based at least in part on the rotated dequantized coefficients block, wherein the determination of the rotated data block is performed in a pixel domain; and

a block relocator logic module configured to relocate the rotated data block into a reconstructed rotated image based at least in part on the rotation data,

wherein the image is a JPEG still image or an MPEG video image,

wherein the decoding and the rotating are performed on a data block-by-data block basis,

wherein the decoding and the rotating are performed without storing the decoded image between the decoding and the rotating.

29. An article for concurrent image decoding and rotation comprising a computer program product having stored therein instructions that, if executed, result in:

receiving an image, wherein rotation data is associated with the image;
decoding the image; and
rotating the image based at least in part on the rotation data, wherein at least a portion of the rotation is performed during the decoding of the image.

30. The article of example 29, wherein the decoding and the rotating of the image further comprises:

decoding, via an entropy decoder logic module, a quantized coefficients block, wherein the quantized coefficients block contains a plurality of quantized discrete cosine transform coefficients;

relocating, via a coefficient relocator logic module, a quantization matrix based at least in part on the rotation data;

relocating, via the coefficient relocator logic module, the coefficients of the quantized coefficients block into a rotated quantized coefficients block based at least in part on the rotation data, wherein the relocation of the coefficients of the quantized coefficients block is performed in a frequency domain;

dequantizing, via the dequantizer logic module, the decoded rotated quantized coefficients block into a rotated dequantized coefficients block based at least in part on the relocated quantization matrix;

determining, via an inverse discrete cosine transform logic module, a rotated data block by performing an inverse discrete cosine transform based at least in part on the rotated dequantized coefficients block, wherein the determination of the rotated data block is performed in a pixel domain;

relocating, via a block relocator logic module, the rotated data block into a reconstructed rotated image based at least in part on the rotation data; and

displaying the reconstructed rotated image on a display device,

wherein the image is a JPEG still image or an MPEG video image,

wherein the decoding and the rotating are performed on a data block-by-data block basis,

wherein the decoding and the rotating are performed without storing the decoded image between the decoding and the rotating.

## Claims

1. A computer-implemented method for concurrent image decoding and rotation, comprising:

    receiving an image, wherein rotation data is associated with the image;
    decoding the image; and
    rotating the image based at least in part on the rotation data, wherein at least a portion of the rotation is performed during the decoding of the image.

2. The method of claim 1, wherein the decoding and the rotating are performed without storing the decoded image between the decoding and the rotating.

3. The method of claim 1, wherein the decoding and the rotating are performed on a data block-by-data block basis.

4. The method of claim 1, wherein the decoding and the rotating of the image further comprises:

    relocating a quantization matrix based at least in part on the rotation data; and
    dequantizing a decoded quantized coefficients block into a dequantized coefficients block based at least in part on the relocated quantization matrix.

5. The method of claim 1, wherein the decoding and the rotating of the image further comprises:

    decoding a quantized coefficients block, wherein the quantized coefficients block contains a plurality of quantized discrete cosine transform coefficients;
    relocating a quantization matrix based at least in part on the rotation data; and
    dequantizing the decoded quantized coefficients block into a dequantized coefficients block based at least in part on the relocated quantization matrix.

6. The method of claim 1, wherein the decoding and the rotating of the image further comprises:

    relocating the coefficients of a quantized coefficients block into a rotated quantized coefficients block based at least in part on the rotation data, wherein the relocation of the coefficients of the quantized coefficients block is performed in a frequency domain.

7. The method of claim 1, wherein the decoding and the rotating of the image further comprises:

    determining a rotated data block by performing an inverse discrete cosine transform based at least in part on a rotated dequantized coefficients block, wherein the determination of the rotated data block is performed in a pixel domain.

**8.** The method of claim 1, wherein the decoding and the rotating of the image further comprises:

relocating a rotated data block into a reconstructed rotated image based at least in part on the rotation data; and displaying the reconstructed rotated image on a display device.

**9.** The method of claim 1, wherein the decoding and the rotating of the image further comprises:

decoding, via an entropy decoder logic module, a quantized coefficients block, wherein the quantized coefficients block contains a plurality of quantized discrete cosine transform coefficients;
relocating, via a coefficient relocator logic module, a quantization matrix based at least in part on the rotation data;
relocating, via the coefficient relocator logic module, the coefficients of the quantized coefficients block into a rotated quantized coefficients block based at least in part on the rotation data, wherein the relocation of the coefficients of the quantized coefficients block is performed in a frequency domain;
dequantizing, via the dequantizer logic module, the decoded rotated quantized coefficients block into a rotated dequantized coefficients block based at least in part on the relocated quantization matrix;
determining, via an inverse discrete cosine transform logic module, a rotated data block by performing an inverse discrete cosine transform based at least in part on the rotated dequantized coefficients block, wherein the determination of the rotated data block is performed in a pixel domain;
relocating, via a block relocator logic module, the rotated data block into a reconstructed rotated image based at least in part on the rotation data; and
displaying the reconstructed rotated image on a display device,
wherein the image is a JPEG still image or an MPEG video image,
wherein the decoding and the rotating are performed on a data block-by-data block basis,
wherein the decoding and the rotating are performed without storing the decoded image between the decoding and the rotating.

**10.** A system for concurrent image decoding and rotation on a computer, comprising:

a display device configured to present a decoded and rotated image;
one or more processors communicatively coupled to the display device;
one or more memory stores communicatively coupled to the one or more processors; and
a decoder communicatively coupled to the one or more processors and configured to:

receive an image, wherein rotation data is associated with the image,
decode the image, and
rotate the image based at least in part on the rotation data, wherein at least a portion of the rotation is performed during the decoding of the image.

**11.** The system of claim 10, wherein the decoder comprises:

an entropy decoder logic module configured to decode a quantized coefficients block, wherein the quantized coefficients block contains a plurality of quantized discrete cosine transform coefficients;
a coefficient relocator logic module configured to relocate a quantization matrix based at least in part on the rotation data and configured to relocate the coefficients of the quantized coefficients block into a rotated quantized coefficients block based at least in part on the rotation data, wherein the relocation of the coefficients of the quantized coefficients block is performed in a frequency domain;
a dequantizer logic module configured to dequantize the decoded rotated quantized coefficients block into a rotated dequantized coefficients block based at least in part on the relocated quantization matrix;
an inverse discrete cosine transform logic module configured to determine a rotated data block by performing an inverse discrete cosine transform based at least in part on the rotated dequantized coefficients block, wherein the determination of the rotated data block is performed in a pixel domain; and
a block relocator logic module configured to relocate the rotated data block into a reconstructed rotated image based at least in part on the rotation data,
wherein the display device is configured to display the reconstructed rotated image,
wherein the image is a JPEG still image or an MPEG video image,
wherein the decoding and the rotating are performed on a data block-by-data block basis,

wherein the decoding and the rotating are performed without storing the decoded image between the decoding and the rotating.

12. An apparatus for concurrent image decoding and rotation, comprising:

a decoder, the decoder configured to:

receive an image, wherein rotation data is associated with the image;
decode the image; and
rotate the image based at least in part on the rotation data, wherein at least a portion of the rotation is performed during the decoding of the image.

13. The apparatus of claim 12, wherein the decoder comprises:

an entropy decoder logic module configured to decode a quantized coefficients block, wherein the quantized coefficients block contains a plurality of quantized discrete cosine transform coefficients;
a coefficient relocator logic module configured to relocate a quantization matrix based at least in part on the rotation data and configured to relocate the coefficients of the quantized coefficients block into a rotated quantized coefficients block based at least in part on the rotation data, wherein the relocation of the coefficients of the quantized coefficients block is performed in a frequency domain;
a dequantizer logic module configured to dequantize the decoded rotated quantized coefficients block into a dequantized coefficients block based at least in part on the relocated quantization matrix;
an inverse discrete cosine transform logic module configured to determine a rotated data block by performing an inverse discrete cosine transform based at least in part on the rotated dequantized coefficients block, wherein the determination of the rotated data block is performed in a pixel domain; and
a block relocator logic module configured to relocate the rotated data block into a reconstructed rotated image based at least in part on the rotation data,
wherein the image is a JPEG still image or an MPEG video image,
wherein the decoding and the rotating are performed on a data block-by-data block basis,
wherein the decoding and the rotating are performed without storing the decoded image between the decoding and the rotating.

14. An apparatus, comprising means for performing a method as claimed in any preceding claim.

15. Machine-readable storage including machine-readable instructions which, when executed, implement a method or realize an apparatus as claimed in any preceding claim.

100

IMAGING
DEVICE
102

IMAGE
ROTATION
MODULE
106

DECODER
104

MEMORY
STORE(S)
108

IMAGE
ROTATION
MODULE
112

DISPLAY
DEVICE
110

FIG. 1

200

RECEIVE AN IMAGE AND ASSOCIATED ROTATION DATA
202

DECODE THE IMAGE
204

ROTATE THE IMAGE CONCURRENT WITH THE DECODE
206

FIG. 2

100

LOGIC MODULES 306

| ENTROPY DECODER LOGIC MODULE 308 | COEFFICIENT RELOCATOR LOGIC MODULE 309 | DEQUANTIZER LOGIC MODULE 310 | IDCT LOGIC MODULE 311 | BLOCK RELOCATOR LOGIC MODULE 312 |

314 RECEIVE AN IMAGE AND ASSOCIATED ROTATION DATA

316 DECODE A QUANTIZED COEFFICIENTS BLOCK

300

320 RELOCATE THE COEFFICIENTS OF THE QUANTIZED COEFFICIENTS BLOCK AND QUANTIZATION MATIRX

322 DEQUANTIZE THE DECODED ROTATED QUANTIZED COEFFICIENTS BLOCK

324 PERFORM INVERSE DISCRETE COSINE TRANSFORM

326 RELOCATE THE ROTATED DATA BLOCK

328 DISPLAY THE RECONSTRUCTED ROTATED IMAGE

FIG. 3

IMAGING
DEVICE(S)
102

DECODER 104

LOGIC MODULES 306

ENTROPY
DECODER
LOGIC
MODULE
308

COEFFICIENT
RELOCATOR
LOGIC
MODULE
309

DEQUANTIZER
LOGIC
MODULE
310

IDCT
LOGIC
MODULE
311

BLOCK
RELOCATOR
LOGIC
MODULE
312

PROCESSOR(S)
406

MEMORY
STORE(S)
108

DISPLAY
DEVICE
110

DECODING AND ROTATION SYSTEM
100

FIG. 4

500

550

DISPLAY 520

USER INTERFACE 522

Platform 502

Antenna

Memory 512

Radio 518

Storage 514

Chipset 505

Applications 516

Processor 510

Graphics Subsystem 515

Content Delivery Device(s) 540

Content Services Device(s) 530

Network 560

FIG. 5

600

608

604

610

602

612

606

FIG. 6

Europäisches Patentamt

European Patent Office

Office européen des brevets

# EUROPEAN SEARCH REPORT

Application Number

EP 13 16 5530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/254715 A1 (KENG KUO-KUANG [TW] ET AL) 17 November 2005 (2005-11-17) <br> * the whole document * <br> ----- | 1-15 | INV. <br> G06T3/60 <br> H04N7/26 |
| X | EP 2 264 668 A1 (SILICONFILE TECHNOLOGIES INC [KR]) 22 December 2010 (2010-12-22) <br> * abstract * <br> * paragraph [0001] - paragraph [0006] * <br> * paragraph [0013] - paragraph [0038] * <br> ----- | 1-15 | |
| A | SHEN B ET AL: "INNER-BLOCK OPERATIONS ON COMPRESSED IMAGES", <br> PROCEEDINGS OF ACM MULTIMEDIA '95 SAN FRANCISCO, NOV. 5 - 9, 1995; [PROCEEDINGS OF ACM MULTIMEDIA], NEW YORK, ACM, US, <br> 5 November 1995 (1995-11-05), pages 489-498, XP000599051, <br> ISBN: 978-0-201-87774-8 <br> * the whole document * <br> ----- | 1-15 | |
| | | | TECHNICAL FIELDS SEARCHED (IPC) <br><br> G06T <br> H04N |

The present search report has been drawn up for all claims

| Place of search | Date of completion of the search | Examiner |
|---|---|---|
| Munich | 28 August 2013 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 657 906 A1

**ANNEX TO THE EUROPEAN SEARCH REPORT
ON EUROPEAN PATENT APPLICATION NO.**

EP 13 16 5530

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2013

| Patent document cited in search report | Publication date | Patent family member(s) | Publication date |
|---|---|---|---|
| US 2005254715 A1 | 17-11-2005 | TW I237996 B<br>US 2005254715 A1 | 11-08-2005<br>17-11-2005 |
| EP 2264668 A1 | 22-12-2010 | CN 101931804 A<br>EP 2264668 A1<br>JP 2011003191 A<br>KR 20100136830 A<br>TW 201101230 A<br>US 2010322528 A1 | 29-12-2010<br>22-12-2010<br>06-01-2011<br>29-12-2010<br>01-01-2011<br>23-12-2010 |

EPO FORM P0459

For more details about this annex : see Official Journal of the European Patent Office, No. 12/82